# EUROPEAN PATENT SPECIFICATION

(11) **EP 0 690 082 B1**
(45) Date of publication and mention of the grant of the patent: **27.08.1997**
(21) Application number: 95201796.0
(22) Date of filing: 30.06.1995
(51) Int. Cl.: C08F 297/04, C10M 143/12, C08G 81/02

(54) **Star polymer viscosity index improver for oil lubricating compositions**
Sternpolymer Viskosetätsindexverbesserung für Schmierölzusammensetzungen
Polymère en étoile améliorant l'indice de viscosité de compositions d'huiles lubrifiantes

(30) Priority: 01.07.1994 US 269724
(43) Date of publication of application: 03.01.1996
(73) Proprietor: SHELL INTERNATIONALE RESEARCH MAATSCHAPPIJ B.V., 2596 HR Den Haag (NL)
(72) Inventor: Rhodes, Robert Barnett, Houston, Texas 77070 (US); Stevens, Craig Aldred, Houston, Texas 77094 (US)

(56) References cited:
- EP-A- 0 425 027
- US-A- 4 116 917
- US-A- 4 788 361
- US-A- 4 849 481
- US-A- 5 302 667

## Description

The present invention relates to star polymers, a process for their preparation, and to lubricating oil compositions and lubricating oil concentrates containing them.

The viscosity of lubricating oil compositions varies with temperature. In general, lubricating oil compositions are identified by a viscosity index which is a function of the lubricating oil composition kinematic viscosity at a given lower temperature and a given higher temperature. The given lower temperature and the given higher temperature have varied over the years but are fixed at any given time in an ASTM test procedure (ASTM D2270). Currently, the lower temperature specified in the test is 40°C and the higher temperature specified in the test is 100°C. For two engine lubricating oil compositions with the same kinematic viscosity at 100°C, the one having the lower kinematic viscosity at 40°C will have the higher viscosity index. The lubricating oil composition with the higher viscosity index undergoes less kinematic viscosity change between the temperatures of 40°C and 100°C. In general, viscosity index improvers that are added to engine lubricating oil compositions increase the viscosity index as well as the kinematic viscosities.

Numerous methods have been proposed for improving the rheological properties of lubricating compositions. Generally, these methods involve the use of a polymeric additive which cannot be handled as a solid.

Recently it has been discovered that certain asymmetric star polymers are both solid polymers and effective VI improvers for lubricating oil compositions as disclosed in United States Patent No. 4,849,481. The patent describes asymmetric star polymers of conjugated diolefin blocks, such as polyisoprene, and monoalkenyl aromatic blocks, such as polystyrene. The asymmetric star polymers have sufficient amounts of the monoalkenyl aromatic blocks to be cyclone finishable as a polymer crumb. The star polymers contain a substantial amount of external monoalkenyl aromatic blocks and produce lubricating oil compositions having reduced high temperature, high shear rate (HTHSR) viscosities. However, along with 100^{o}C kinematic viscosity, minimum HTHSR viscosity limits are also now used to grade oils by the SAE J300 standard of the SAE Engine Oil Viscosity Classification System.

Although reduced HTHSR viscosities likely indicate good fuel efficiency, increased HTHSR viscosities are needed for high performance engines which operate at higher temperatures and rpms, or for engines having marginally designed journal bearings. The Star polymers disclosed in U. S. Patent 4,849,481 are crumb, cyclone-finishable polymers which generally can provide sufficient 100°C kinematic viscosities but provide insufficient HTHSR viscosity to meet the SAE J300 requirements. To improve their HTHSR viscosity contribution, a sufficiently low amount of monoalkenyl aromatic blocks may be used, but this reduces cyclone finishability. On the other hand, if more, or larger monoalkenyl blocks are used, then the polymer becomes gelated in oil at low temperatures, and this results in a failing yield stress when the oil is evaluated in the TP1-MRV test, ASTM D4684.

In United States patent 4,116,917 viscosity improvers for lubricating oil compositions have been described which comprise a star polymer having arms linked to a nucleus. The arms may for instance comprise a poly(isoprene/styrene/isoprene) three block copolymer in which the styrene blocks are located close to the outer edge of the star polymer (see Example 16). It appears that the viscosity characteristics of such a star polymer comprising three block copolymer arms and of conventional star polymers having all-polyisoprene arms do not differ particularly.

In accordance with the present invention, however, it has now surprisingly been found that star polymers having poly(isoprene/styrene/isoprene) three block copolymer arms display an improved performance when the styrene blocks are located close to the nucleus of the star polymer.

Accordingly, the present invention provides a star polymer, useful as a viscosity index (VI) improver, which comprises polystyrene blocks and hydrogenated polyisoprene blocks combined in molecules having the structure (EP'-S-EP'')ₙ-X, wherein EP' is a first hydrogenated block of polyisoprene (I') having a number average molecular weight (Mₙ) between 10,000 and 100,000 before hydrogenation, S is a block of polystyrene having a number average molecular weight (Mₙ) between 6,000 and 50,000, and EP'' is a second hydrogenated blocks of polyisoprene (I'') having a number average molecular weight (Mₙ) between 2,500 and 50,000 before hydrogenation, the molecular weight ratio of (M_{W}) I'/I'' is at least 1.4, X is a nucleus of a polyalkenyl coupling agent, and n is the average number of (EP'-S-EP") arms per star molecule formed by reaction of 2 or more moles of the polyalkenyl coupling agent per mole of the arms.

The star polymers in accordance with the present invention show enhanced cyclone-finishability and lower pumping viscosity in fully formulated multigrade engine lubricants, and do not gel engine oils.

It is also surprising that while good melt viscosity and good thickening efficiency in multigrade oils is retained with appropriate internal location of polystyrene blocks relative to an external location, the viscosity of heavily-doped oil concentrates can sometimes be reduced. Thus, VI improver oil concentrates may contain more polymer and less oil if the polystyrene block is appropriately positioned internally along the arm of the star polymer. This is particularly favored if the polystyrene block number average molecular weight is kept on the low side of the range, preferably between about 6,000 to 9,000. Some of the star polymers of this invention also have improved oil concentrate fluidity, relative to other hydrogenated star polymers. With either improvement, the polystyrene block is internal, yet the star polymers have good melt viscosities at 121°C. Prior to coupling, the arms have the structure polyisoprene-polystyrene-polyisoprene (I'-S-I''-Li). The star polymer is selectively hydrogenated to saturate at least 95% by weight of the isoprene units and less than 15% by weight of the styrene units.

The star polymers of the present invention can be prepared by the type of processes as described in Canadian Patent No. 716,645 and United States Patent No. Re 27,145 which are hereby incorporated by reference.

Although the reason for the improvement at low temperatures is not fully understood, it is believed that modification of the star arms by placement of a polystyrene block between two polyisoprene blocks as described above causes a smaller effective chain length at lower temperatures as a result of intramolecular association of the styrene blocks. When the temperature increases the styrene blocks can dis-associate giving longer effective chain lengths and a greater contribution to kinematic viscosity, which is not desired at the lower temperatures. Both the size and placement of the styrene blocks are critical for improved performance. The star polymes according to the present invention contribute less to viscosity as measured in the TP1-MRV and Scanning Brookfield tests. Some of the star polymers in accordance with this invention also provide multigrade oils with higher viscsosity indexes than hydrogenated, all-polyisoprene star polymers or other hydrogenated poly(styrene/isoprene) block copolymer star polymers.

The appropriatedly sized and placed polystyrene in accordance with the invention lower lubricating oil concentrate viscosities at 100°C relative to all-polyisoprene-armed stars, yet this placement does not decrease the polymer's contribution to 100°C kinematic viscosity in fully-formulated multigrade oils.

The present star polymers which are useful as VI improvers are suitably prepared by anionically polymerising isoprene in the presence of an initiator such as sec-butyllithium, adding styrene, and then more isoprene to the living polystyrene molecules to make the living block copolymer molecules, coupling the living block copolymer molecules with a polyalkenyl coupling agent to form a star polymer, and selectively hydrogenating the polyisoprene blocks.

The star polymers of the present invention may be characterized prior to hydrogenation as having a central core or nucleus of crosslinked poly(polyalkenyl coupling agent) and a number of block copolymer arms extending outwardly therefrom. The number of arms, as determined by conventional gel permeation chromotography (GPC), may vary considerably but typically range from 6 to 13.

In general, the star polymers may be selectively hydrogenated to saturate the polyisoprene blocks using any of the techniques known in the prior art to be suitable for selective hydrogenation of olefinic unsaturation over aromatic unsaturation.

The hydrogenation conditions must be sufficient to hydrogenate at least 95% of the original olefinic unsaturation. Hydrogenation of aromatic unsaturation must be less than 15% to avoid reduction of the amount of polystyrene needed to finish the star polymers.

In general, hydrogenation involves the use of a suitable catalyst as described in U.S. Patent No. Re 27,145 which is herein incorporated by reference. A mixture of nickel ethylhexanoate and triethylaluminium having 2.3 moles of aluminium per mole of nickel is preferred.

The hydrogenated star polymers in accordance with the present invention may be added to a variety of lubricating oil compositions to improve viscosity index characteristics.

Suitable lubricating oils are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to cerain treatments such as clay-acid, solvent or hdyrogenation treatments. Synthetic lubricating oils include synthetic polymers of hydrocarbons, modified alkylene oxide polymers, and ester lubricants, which are know in the art. These lubricating oils are preferably crankcase lubricating oils for spark-ignition and compression-ignition engines, but include also hydraulic lubricants, metla-working fluids and automatic transmission fluids.

Preferably the lubricating base oil component of the compositoins according to the present invention is a mineral lubricating oil or a mixture of a mineral lubricating oils, such as those sold by member companies of the Royal Dutch/Shell Group under the designations "HVI", or "XHVI" (Trade Mark).

The viscosity of the lubricating base oils present in the compositions according to the present invention may vary within wide ranges, and is generally from 3 to 35 mm²/s at 100°C.

Accordingly, the present invention also provides a lubricating oil composition comprising a major amount (more than 50%w) and a minor amount (less than 50%w), preferably from 0.05 to 10%w, more preferably from 0.2 to 5%w, and especially from 0.5 to 2.5%w, of a star polymer according to the present invention, all percentages by weight based on total composition.

The present invention still further provides a lubricating oil concentrate comprising from 10 to 80%w, based on the total concentrate, of a star polymer according to the present invention. Such a concentrate generally comprises an inert carrier fluid, e.g. a lubricating oil, and one or more additives in a concentrated form.

Lubricating oil compositions prepared with the present selectively hydrogenated star polymers may also contain other additives such as anti-corrosive additives, antioxidants, detergents, pour point depressants, one or more additional VI improvers and the like. Typical additives which are useful in the lubricating oil compositions according to the present invention can be found in U.S. Patent Nos. 3,772,196 and 3,835,083, which are hereby incorporated by reference.

In a preferred embodiment of the present invention, the polystyrene blocks and the hydrogenated isoprene blocks are combined in molecules having the structure (EP'-S-EP'')ₙ-X, wherein the first hydrogenated block of polyisoprene (I') has a number average molecular weight (Mₙ) from 20,000 to 60,000 before hydrogenation, the polystyrene block (S) has a number average molecular weight (Mₙ) from 10,000 to 35,000, the second hydrogenated block of polyisoprene (I'') has a number average molecular weight (Mₙ) from 5,500 to 33,000 before hydrogenation, the molecular weight ratio (M_{w}) of I'/I'' is from 1.8 to 10.9, X is a nucleus of a polyalkenyl coupling agent, and n is the average number of (EP'-S-EP") arms per star molecule formed by reaction of 2 or more moles of the polyalkenyl coupling agent per mole of the arms.

The star polymer is suitably prepared by anionically polymerising isoprene, then styrene, and then isoprene to prepare living polyisoprene-polystyrene-polyisoprene-Li molecules. The living block copolymer molecules are preferably coupled with divinylbenzene using 3 moles of divinylbenzene per mole of copolymer molecules. The coupled polymers can suitably be selectively hydrogenated with a solution of nickel ethylhexanoate and triethylaluminium having a preferred Al/Ni molar ratio of 2.3:1 to saturate at least 98% of the isoprene units and less than 10% of the styrene units.

Such star polymers are cyclone finishable as a polymer crumb and produce lubricating oil compositions having excellant high and low temperature viscosities suitable for high performance engines.

The present invention will now be illustrated by means of the following examples.

### Example 1

In this example, a star polymer comprising triblock arms of hydrogenated isoprene and styrene was prepared. In the first step of the preparation, living polyisoprene blocks (I') were prepared by anionically polymerising isoprene in cyclohexene. The polymerisation of the isoprene was initiated by adding sec-butyllithium. The polymerisation of the isoprene was completed to prepare living polyisoprene blocks (I') having a number average molecular weight (Mₙ) of 58,000. Polystyrene blocks were then formed by adding styrene to the solution of living polyisoprene blocks. The polymerisation of styrene was completed to prepare polystyrene blocks having a number average molecular weight (Mₙ) of 36,000. Polyisoprene blocks were then formed by adding isoprene to the solution of living polyisoprene-polystyrene blocks. The second polymerisation of isoprene was completed to prepare second polyisoprene blocks (I'') having a number average molecular weight (Mₙ)of 7,000. The I'/I'' molecular weight ratio (M_{w}) was 8.3.

The living tri-block copolymer arms were then coupled with divinylbenzene using 3 moles of divinylbenzene per mole of the living block copolymer molecules. The coupling reaction was allowed to proceed to completion after which the lithium sites remaining in the star polymer were deactivated by adding an alcohol.

The star polymer was next hydrogenated so as to saturate more than 98% of the olefinic unsaturation originally contained in the isoprene blocks and less than 15% of the aromatic unsaturation using a catalyst prepared by combining nickel ethylhexanoate and triethylaluminium (2.3 moles of aluminium per mole of nickel). The melt viscosity of the star polymer was sufficiently high to permit finishing as a solid polymer crumb. The melt viscosity of the star polymer was 37 megapoise (x 10⁵ Pa s) at 121 °C. The data and results are summarized in Table 1.

### Example 2

In this example, a star polymer comprising isoprene/styrene/isoprene triblock copolymer arms was prepared using the procedure described in Example 1 except that the number average molecular weight (Mₙ) of the first polyisoprene block (I'') was 56,400, the number average molecular weight (Mₙ) of the polystyrene block (S) was 30,000, and the number average molecular weight (Mₙ) of the second polyisoprene block (I'') was 2,500. The I'/I'' molecular weight ratio (M_{w}) was 22.6. The melt viscosity of the star polymer was 28 megapoise (x 10⁵ Pa s)at 121°C. The data and results are summarized in Table 1.

### Example 3 (Comparison)

In this comparative example, a star polymer comprising isoprene/styrene/isoprene triblock copolymer arms was prepared using the procedure described in Example 1 except that the number average molecular weight (Mₙ) of the first polyisoprene block (I') was 2,800, the number average molecular weight (Mₙ) of the polystyrene block (S) was 34,100, and the number average molecular weight (Mₙ) of the second polyisoprene block (I'') was 59,000. The I'/I'' molecular weight ratio (M_{w}) was 0.05. The melt viscosity of the star polymer was 122 megapoise (x 10⁵ Pa s) at 121°C. The data and results are summarized in Table 1.

### Example 4

In this example, a star polymer comprising isoprene/styrene/isoprene triblock copolymer arms was prepared using the procedure described in Example 1 except that the number average molecular weight (Mₙ) of the first polyisoprene block (I') was 38,400, the number average molecular weight (Mₙ) of the polystyrene block was 11,200 (S), and the number average molecular weight (Mₙ) of the second polyisoprene block (I'') was 11,200. The molecular weight ratio (M_{w}) of I'/I'' was 3.4. The melt viscosity of the star polymer was 17.6 megapoise (x 10⁵ Pa s) at 121°C. The data and results are summarized in Table 1.

### Example 5 (Comparison)

In this comparitive example, a star polymer comprising isoprene/styrene/isoprene triblock copolymer arms was prepared using the procedure described in Example 1 except that the number average molecular weight (Mₙ) of the first polyisoprene block (I') was 24,700, the number average molecular weight (Mₙ) of the polystyrene block (S) was 7,100, and the number average molecular weight (Mₙ) of the second polyisoprene blocks (I'') was 46,800. The molecular weight ratio (M_{w}) of I'/I'' was 0.5. The melt viscosity of the star polymer was 64 megapoise (x 10⁵ Pa s) at 121°C. Compositional data and melt viscosity results are summarized in Table 1.

### Example 6 (Comparison)

In this comparative example, a star polymer comprising isoprene/styrene/isoprene triblock copolymer arms was prepared using the procedure described in Example 1 except that the number average molecular weight (Mₙ) of the first polyisoprene block (I') was 10,000, the number average molecular weight (Mₙ) of the polystyrene block (S) was 8,600, and the number average molecular weight (Mₙ) of the second polyisoprene block (I'') was 44,900. The molecular weight ratio (M_{w}) of I'/I'' was 0.2. The melt viscosity of the star polymer was 64 megapoise (x 10⁵ Pa s) at 121°C. Compositional data and melt viscosity results are summarized in Table 1.

### Example 7

In this example, a star polymer comprising isoprene/styrene/isoprene triblock copolymer arms was prepared using the procedure described in Example 1 except that the number average molecular weight (Mₙ) of the first polyisoprene block (I') was 39,700, the number average molecular weight (Mₙ) of the polystyrene block (S) was 6,200, and the number average molecular weight (Mₙ) of the second polyisoprene block (I'') was 15,700. The molecular weight ratio (M_{w}) of I'/I'' was 2.5. The melt viscosity of the star polymer was 19.5 megapoise (x 10⁵ Pa s) at 121°C. Compositional data and melt viscosity results are summarized in Table 1.

### Example 8

In this example, a star polymer comprising isoprene/styrene/isoprene triblock copolymer arms was prepared using the procedure described in Example 1 except that the number average molecular weight (Mₙ) of the first polyisoprene block (I') was 35,200, the number average molecular weight (Mₙ) of the polystyrene block (S) was 15,700, and the number average molecular weight (Mₙ) of the second polyisoprene block (I'') was 17,300. The molecular weight ratio (M_{w}) of I'/I'' was 2.0. The melt viscosity of the star polymer was 52 megapoise (x 10⁵ Pa s) at 121°C. Compositional data and melt viscosity results are summarized in Table 1.

### Example 9

In this example, a star polymer comprising isoprene/styrene/isoprene triblock copolymer arms was prepared using the procedure described in Example 1 except that the number average molecular weight (Mₙ) of the first polyisoprene block (I') was 35,000, the number average molecular weight (Mₙ) of the polystyrene block (S) was 24,900, and the number average molecular weight (Mₙ) of the second polyisoprene block (I'') was 18,700. The molecular weight ratio (M_{w}) of I'/I'' was 1.9. The melt viscosity of the star polymer was 61 megapoise (x 10⁵ Pa s) at 121°C. Compositional data and melt viscosity results are summarized in Table 1.

### Example 10 (Comparison)

In this comparative example, a star polymer comprising isoprene/styrene/isoprene triblock copolymer arms was prepared using the procedure described in Example 1 except that the number average molecular weight (Mₙ) of the first polyisoprene block (I') was 29,800, the number average molecular weight (Mₙ) of the polystyrene block (S) was 15,600, and the number average molecular weight (Mₙ) of the second polyisoprene block (I'') was 23,000. The molecular weight ratio (M_{w}) of I'/I'' was 1.3. The melt viscosity of the star polymer was 55 megapoise (x 10⁵ Pa s) at 121°C. Compositional data and melt viscosity results are summarized in Table 1.

### Example 11 (Comparison)

In this comparative example, a star polymer comprising arms of a block copolymer containing a single block of polystyrene and a single block of hydrogenated polyisoprene was prepared. In the first step of the preparation, living molecules of polystyrene were prepared by anionically polymerising styrene in cyclohexene. The polymerisation of styrene was initiated by adding sec-butyllithium. The polymerisation of the styrene was completed to produce living polystyrene molecules having a number average molecular weight (Mₙ) of 3,300. Polyisoprene blocks were then formed by adding isoprene to the solution of living polystyrene molecules. The polymerisation of isoprene was completed to produce polyisoprene blocks having a number average molecular weight (Mₙ) of 51,200.

The living block copolymer arms were then coupled with divinylbenzene using 3 moles of divinylbenzene per mole of the living block copolymer molecules. The coupling reaction was allowed to proceed to completion after which the lithium sites remaining in the star polymer were deactivated by adding an alcohol.

The star polymer was next hydrogenated so as to saturate more than 98% of the olefinic unsaturation originally contained in the isoprene blocks and less than 15% of the aromatic unsaturation using a catalyst prepared by combining nickel ethylhexanoate and triethylaluminium (2.3 moles of aluminium per mole of nickel). The melt viscosity of the star polymer was sufficiently high to permit finishing as a solid polymer crumb. The melt viscosity of the star polymer was 25.1 megapoise (x 10⁵ Pa s) at 121°C. The data and results are summarized in Table 1. The composition of this polymer is similar to "SHELLVIS 260" (Trade Mark) VI improver available from Shell Chemical Company.

### Example 12 (Comparison)

In this comparative example, an all-polyisoprene star polymer, having a polyisoprene molecular weight of 35,000 was prepared and hydrogenated, in accordance with known procedures to be representative of "SHELLVIS 200" (Trade Mark), a commercial VI improver. The melt viscosity of this star polymer is much less than 1 megapoise (x 10⁵ Pa s) at 121°C; it cannot be cyclone finished, and exhibits cold-flow properties at room temperature.

### Example 13 (Comparison)

In this comparative example, an all-polyisoprene star polymer, having a polyisoprene arm molecular weight of 46,000 was prepared and hydrogenated, in accordance with known procedures to be representative of "SHELLVIS 250" (Trade Mark), a commercial VI improver. The melt viscosity of this star polymer is much less than 1 megapoise (x 10⁵ Pa s) at 121°C. The data and results are summarized in Table 1.

### Examples 14 and 15 (Comparison)

In these comparative examples the star polymers produced in Examples 11 and 13 were used as VI improvers in a SAE 10W-40 multi-grade lubricating oil composition. The basestock used in the preparation of the multigrade lubricating oil composition was a blend of an "HVI 100N" oil (trade designation, available ex Shell Oil Company, USA) (a bright and clear high viscosity index base oil having viscosity at 40°C of 20.0 to 21.0 mm²/s (ASTM D445), viscosity index of 88 to 93 (ASTM D2270) and minimum flash point of 190.6 to 196°C (ASTM D92)) and an "HVI 250N" oil (trade designation, available ex Shell Oil Company, USA) (a bright and clear high viscosity index base oil having viscosity at 40°C of 50.7 to 54.0 mm²/s (ASTM D445), viscosity index of 89 to 96 (ASTM D2270) and minimum flash point of 221°C (ASTM 92)). The amount of each VI improver was varied so as to provide a lubricating oil composition having a kinematic viscosity of 14 centistokes (mm²/s) at 100°C. The multigrade lubricating oil compositions prepared in these examples contained 31.0%w of "HVI 250N" oil, 7.75%w of a commercially available API AG quality additive package ("Lubrizol 7573A" (Trade Mark)) and 0.3 %w "Acryloid 160" (Trade Mark) low point depressant. the viscosity index (VI), the cold cranking simulator 9CCS) viscosity at -20°C, the engine oil pumpabilty (TP1) at -25°C using the mini-rotary viscometer (ASTM D4684), and the high temperature, high shear rate (HTHSR) viscosity at 150C at 1 x 10⁶ seconds⁻¹ in the tapered bearing simulator (TBS) (ASTM D4683) were determined for each lubricating oil composition.

All of these examples produced lubricating oil compositions from cyclone finished polymer crumb. The lubricating oil compositions have good HTHSR viscosities and excellent low temperature viscosities. The data and results are summarized in Table 2. It is seen from examples 14 and 15 that polymer 11 appears to contribute more to TP1-MRV viscosity than polymer 13. However, example 26 contains 25% of the more viscous "HVI 250" base stock.

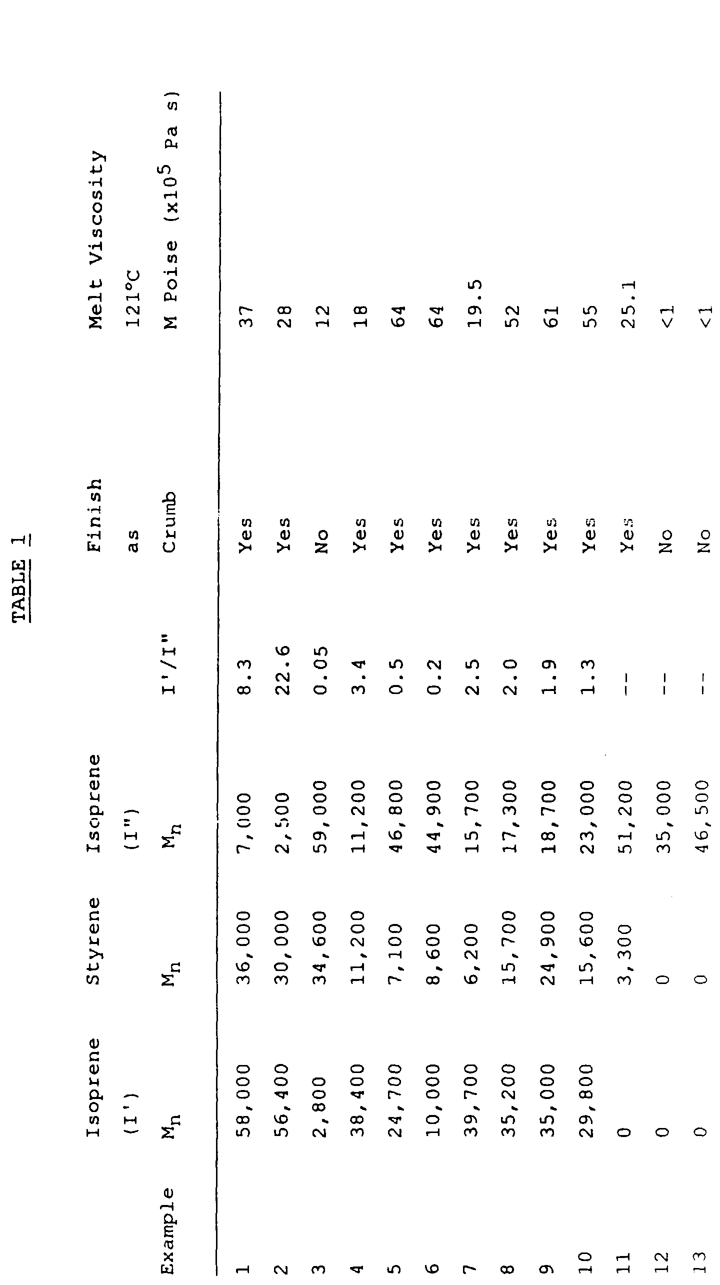

**TABLE 2**

| Example | Polymer Example | Polymer (%w)*. | CCS -20°,cP (x10⁻³Pa s) | TP1 MRV,cP (x10⁻³Pa s) | VI | TBS,cP (x10⁻³Pas) |
|---|---|---|---|---|---|---|
| 14 | 11 | 0.97 | 3,490 | 220 | 153 | 3.49 |
| 15* | 13 | 1.12 | 3,020 | 177 | 158 | 3.61 |

| | | | | | | |
|---|---|---|---|---|---|---|
| * %w based on the total composition | | | | | | |

### Examples 16 and 17 (Comparison)

In these comparative examples the star polymers produced in Examples 11 and 13, were used as VI improvers in a SAE 5W-30 multigrade lubricating oil composition. The base stock used in the preparation of the multigrade contained only Atlas "HVI 100N" oil. The amount of each VI improver was varied so as to provide a lubricating oil composition having a kinematic viscosity of 10.5 centistokes (mm²/s) at 100°C. The multigrade lubricating oil compositions prepared in these examples contained 9.1 %w of a "DI" (dispersant-inhibition) additive package (from Ethyl Corporation) and 0.3 %w Hitec 623 pour point depressant. The viscosity index (VI), the cold cranking simulator (CCS) viscosity at -25°C, the engine oil pumpability (TP1) at -30°C using the mini-rotary viscometer (ASTM D4684), and the high temperature, high shear rate (HTHSR) viscosity at 150°C at 1x10⁶ seconds⁻¹ in the tapered bearing simulator (TBS) (ASTM D4683) were determined for each lubricating oil composition. Results are in Table 3, which show that each polymer in examples 16 and 17 provide comparable TP1-MRV viscosities.

**Table 3**

| Example | Polymer Example | Polymer %w*. | CCS -20°C,cP (x10⁻³Pa s) | TP1 MRV,cP (x10⁻³Pa s) | VI | TBS,cP (x10⁻³Pa s) |
|---|---|---|---|---|---|---|
| 16 | 11 | 0.83 | 3,020 | 201 | 160 | 2.91 |
| 17 | 13 | 0.98 | 3,330 | 213 | 160 | 2.98 |

| | | | | | | |
|---|---|---|---|---|---|---|
| * %w based on the total composition | | | | | | |

### Examples 18-29

In these examples the star polymers of examples 1-11, and 13 were used as VI improvers in a SAE 10W-40 multigrade lubricating oil composition. The basestock used in the preparation of the multigrade lubricating oil composition was a blend of an "HVI 100N" oil and an "HVI 250N" oil. The amount of each VI improver was varied so as to provide a lubricating oil composition having a kinematic viscosity of 14 centistokes (mm²/s) at 100C. The multigrade lubricating oil compositions prepared in these examples contained 11.6 %w of a commercially available DI package (ECA 12850, available from Exxon Chemical), and 0.3 %w pour point depressant "Acryloid 160" (available from Rohm and Haas). The viscosity index (VI), the cold cranking simulator (CCS) viscosity at -20°C, the engine oil pumpability (TP1) at -25°C using the mini-rotary viscometer (ASTM D4684), and the high temperature, high shear rate (HTHSR) viscosity at 150°C at 1 x 10⁶ seconds-¹ in the tapered bearing simulator (TBS) (ASTM D4683) were determined for each lubricating oil composition and are reported in Table 4.

### Examples 30-40

In these examples the star polymers produced in polymer examples 1 through 13 were used as VI improvers in a SAE 5W-30 multigrade lubricating oil composition. The basestock used in the preparation of the multigrade lubricating oil was Exxon "HVI 100N" low-pour basestock. The amount of each VI improver was varied so as to provide a lubricating oil composition having a kinematic viscosity of 10.5 centistokes (mm²/s) at 100°C. The multigrade lubricating oil compositions prepared in these examples contained 11.60 %w of a commercially available DI additive package, ECA 12850 (from Exxon Chemical-Paramins), 0.5 %w "Acryloid 160" pour point depressant, and Exxon "HVI 100 N" low-pour point basestock. The Control sample contains these same ingredients, at the same percent weights, but there is no polymer in the blend. The viscosity index (VI), the cold cranking simulator (CCS) viscosity at -25°C, the engine oil pumpability (TP1) at -30°C using the mini-rotary viscometer (ASTM D4684), and the high temperature, high shear rate (HTHSR) viscosity at 150°C at 1 x 10⁶ seconds⁻¹ in the tapered bearing simulator (TBS) (ASTM D4683) were determined for each lubricating oil composition. Results are in Table 5. Scanning Brookfield tests (ASTM D5133) were also run; results are reported at the temperature where viscosity was 5,000, 10,000, 20,000, 30,000, and 40,000 cP(x10⁻³Pa s). Scanning Brookfield results are in Table 6.

**Table 4**

| Example | Polymer Example | Polymer %w. | CCS -20°C,cP (x10⁻³Pa s) | TP1 MRV,cP (x10⁻³Pa s) | VI | TBS,cP (x10⁻³Pa s) |
|---|---|---|---|---|---|---|
| 18 | 1 | 1.20 | 3,050 | 146 | 162 | 3.62 |
| 19 | 2 | 1.33 | 3,060 | 148 | 161 | 3.64 |
| 20¹ | 3 | ---- | ----- | --- | --- | ---- |
| 21 | 4 | 1.07 | 3,110 | 131 | 173 | 3.62 |
| 22 | 5 | 0.80 | 3,160 | 266 | 160 | 3.46 |
| 23 | 6 | 0.96 | 3,150 | y.s.² | 161 | 3.51 |
| 24 | 7 | 0.97 | 2,940 | 140 | 162 | 3.62 |
| 25 | 8 | 1.10 | 2,600 | 98 | 189 | 3.65 |
| 26 | 9 | 1.28 | 2,600 | 97 | 185 | 3.71 |
| 27³ | 10 | 1.07 | 2,610 | 127 | Var. | 3.62 |
| 28 | 11 | 0.97 | 3,200 | 173 | 159 | 3.60 |
| 29 | 13 | 1.02 | 3,250 | 174 | 159 | 3.66 |

| | | | | | | |
|---|---|---|---|---|---|---|
| 1) Oil sample a gel at room temperature | | | | | | |
| 2) yield stress failure | | | | | | |
| 3) Variable kinematic viscosity at 40°C, variable VI, on storage; some evidence of gelation at room temperature, not suitable for use as engine oil. | | | | | | |

**Table 5**

| Example | Polymer Example | Polymer %w*. | CCS -20°C,cP (x10⁻³Pa s) | TP1 MRV,cP (x10⁻³Pa s) | VI | TBS,cP (x10⁻³Pas) |
|---|---|---|---|---|---|---|
| 30 | 1 | 0.93 | 3,110 | 136 | 162 | - |
| 31 | 2 | 0.97 | 3,090 | 125 | 162 | - |
| 32 | 4 | 0.80 | 3,290 | 147 | 172 | 3.09 |
| 33 | 5 | 0.60 | 3,100 | 178 | 161 | - |
| 34 | 7 | 0.73 | 3,100 | 131 | 163 | 3.03 |
| 35 | 8 | 0.81 | 3,050 | 116 | 190 | 3.07 |
| 36 | 9 | 0.93 | 3,110 | 116 | 185 | 3.10 |
| 37* | 10 | 0.76 | 3,100 | 125 | Var | 3.01 |
| 38 | 11 | 0.72 | 3,380 | 168 | 159 | 3.08 |
| 39 | 12 | 0.89 | 3,180 | 140 | 161 | --- |
| 40 | 13 | 0.78 | 3,390 | 145 | 161 | 3.12 |
| Control | None | ---- | 2,810 | 82 | 129 | 2.13 |

| | | | | | | |
|---|---|---|---|---|---|---|
| * Variable 40°C kinematic viscosity and viscosity index on storage, some gelation tendency at room temperature but no evidence in TP1-MRV At -30°C. | | | | | | |

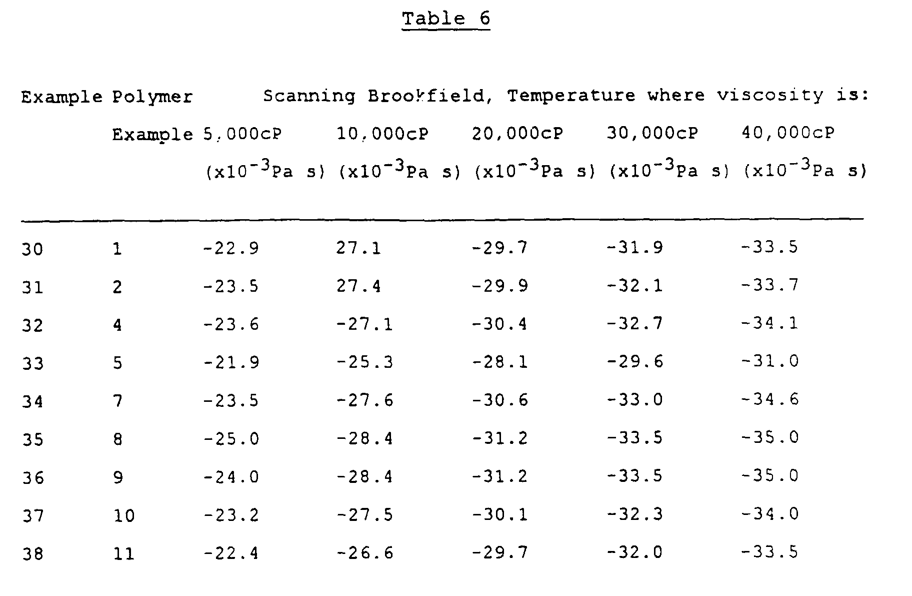

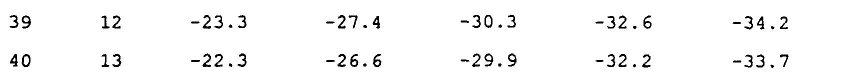

It can clearly be seen from Tables 1-5 that the star polymers according to the present invention are both cyclone finishable and possess good viscosity characteristics.

In comparison, the star polymers of the comparative examples a) possess acceptable viscosity characteristics, but they are not cyclone finishable, b) are cyclone finishable, but do not possess acceptable viscosity characteristics (note, in particular, the poor performance in the engine oil pumpability (TP1) test), or c) are not cyclone finishable and do not possess acceptable viscosity characteristics.

## Claims

1. A star polymer useful as a viscosity index (VI) improver, which comprises polystyrene blocks and hydrogenated polyisoprene blocks combined in molecules having the structure (EP'-S-EP'')ₙ-X, wherein EP' is a first hydrogenated block of polyisoprene (I') having a number average molecular weight (Mₙ) between 10,000 and 100,000 before hydrogenation, S is a block of polystyrene having a number average molecular weight (Mₙ) between 6,000 and 50,000, EP'' is a second hydrogenated block of polyisoprene (I'') having a number average molecular weight (Mₙ) between 2,500 and 50,000 before hydrogenation, the molecular weight ratio (M_{w}) of I'/I'' is at least 1.4, X is a nucleus of a polyalkenyl coupling agent, and n is the average number of (EP'-S-EP'') arms per star molecule formed by reaction of 2 or more moles of the polyalkenyl coupling agent per mole of the arms.

2. A star polymer according to claim 1, wherein the polyalkenyl coupling agent is divinylbenzene.

3. A star polymer according to claim 1 or 2, wherein the number average molecular weight (Mₙ) of the first polyisoprene block (I') is between 20,000 and 60,000, the number average molecular weight (Mₙ) of the second polyisoprene block (I'') is between 5,500 and 33,000, and the ratio of the molecular weight (M_{w}) ratio of I'/I'' is between 1.8 and 10.9.

4. A star polymer according to any one of claims 1-3, wherein the number average molecular weight (Mₙ) of the polystyrene block is from 10,000 to 35,000.

5. A star polymer according to any one of claims 1-4, wherein n is the average number of arms per molecule when coupled with 3 moles of divinylbenzene per mole of the arms.

6. A star polymer according to any one of claims 1-5, wherein the polyisoprene block is at least 98% hydrogenated.

7. A star polymer according to any one of claims 1-6, wherein less than 10% of the aromatic unsaturation is hydrogenated.

8. Process for preparing a star polymer as claimed in any one of claims 1-7, which comprises anionically polymerising isoprene in the presence of sec-butyllithium, adding styrene, and then more isoprene to the living polystyrene molecules to make the living block copolymer molecules, coupling the living block copolymer molecules with polyalkenyl coupling agent to form a star polymer, and selectively hydrogenating the polyisoprene blocks.

9. A lubricating oil composition comprising a base oil and a viscosity improving amount of a star polymer, as claimed by anyone of claims 1-7.

10. A lubricating oil concentrate comprising 10 to 80 %w, based on a total concentrate, of a star polymer as claimed in any one of claims 1-7.

## Patentansprüche

1. Als Viskositätsindex (VI)-Verbesserer geeignetes sternförmiges Polymer, das Polystyrolblöcke und hydrierte Polyisoprenblöcke kombiniert in Molekülen mit der Struktur (EP'S-EP")ₙ-X umfaßt, worin EP' ein erster hydrierter Block aus Polyisopren (I') mit einem zahlenmittleren Molekulargewicht (Mₙ) von 10.000-100.000 vor der Hydrierung ist, S einen Polystyrolblock mit einem zahlenmittleren Molekulargewicht (Mₙ) von 6.000 bis 50.000 darstellt, EP" einen zweiten hydrierten Polyisoprenblock (I") mit einem zahlenmittleren Molekulargewicht (Mₙ) von 2.500 bis 50.000 vor der Hydrierung bedeutet, wobei das Molekulargewichtsverhältnis (M_{w}) von I'/I" wenigstens 1,4 beträgt, X einen Kern eines Polyalkenylkupplungsmittels bedeutet und n die mittlere Anzahl von (EP'-S-EP")-Armen je Sternmolekül darstellt, das durch Umsetzung von 2 oder mehr Mol Polyalkenylkupplungsmittel je Mol Arme gebildet worden ist.

2. Sternförmiges Polymer nach Anspruch 1, worin das Polyalkenylkupplungsmittel Divinylbenzol ist.

3. Sternförmiges Polymer nach Anspruch 1 oder 2, worin das zahlenmittlere Molekulargewicht (Mₙ) des ersten Polyisoprenblocks (I') 20.000 bis 60.000 beträgt, das zahlenmittleren Molekulargewicht (Mₙ) des zweiten Polyisoprenblocks (I") 5.500 bis 33.000 beträgt und das Molekulargewichtsverhältnis (M_{w}) von I'/I" zwischen 1,8 und 10,9 beträgt.

4. Sternförmiges Polymer nach einem der Ansprüch 1-3, worin das zahlenmittlere Molekulargewicht (Mₙ) des Polystyrolblocks 10.000 bis 35.000 beträgt.

5. Sternförmiges Polymer nach einem der Ansprüche 1-4, worin n die mittlere Anzahl der Arme je Molekül bedeutet, wenn mit 3 Mol Divinylbenzol je Mol Arme gekuppelt wird.

6. Sternförmiges Polymer nach einem der Ansprüche 1-5, worin der Polyisoprenblock zumindest zu 98 % hydriert ist.

7. Sternförmiges Polymer nach einem der Ansprüche 1-6, worin weniger als 10 % der aromatischen Unsättigung hydriert sind.

8. Verfahren zur Herstellung eines sternförmigen Polymers nach einem der Ansprüche 1-7, welches ein anionisches Polymerisieren von Isopren in Anwesenheit von sek.Butyllithium, ein Zusetzen von Styrol und anschließend von weiterem Isopren zu den lebenden Polystyrolmolekülen zur Ausbildung der lebenden Blockcopolymermoleküle, ein Kuppeln der lebenden Blockcopolymermoleküle mit einem Polyalkenylkupplungsmittel zur Ausbildung eines sternförmigen Polymers und ein selektives Hydrieren der Polyisoprenblöcke umfaßt.

9. Schmierölzusammensetzung mit einem Gehalt an einem Grundöl und einer viskositätsverbessernden Menge eines sternförmigen Polymers nach einem der Ansprüche 1-7.

10. Schmierölkonzentrat mit einem Gehalt an 10 bis 80 Gew.-%, bezogen auf das Gesamtkonzentrat, an einem sternförmigen Polymer nach einem der Ansprüche 1-7.

## Revendications

1. Polymère étoilé, intéressant à titre d'agent d'amélioration de l'indice de viscosité (IV), caractérisé en ce qu'il est constitué de séquences de polystyrène et de séquences de polyisoprène hydrogénées, en combinaison à des molécules possédant la structure (EP'-S-EP")ₙ-X, dans laquelle EP' est une première séquence hydrogénée de polyisoprène (I') possédant un poids moléculaire moyen en nombre (Mₙ) compris entre 10 000 et 100 000 avant hydrogénation, S est une séquence de polystyrène possédant un poids moléculaire moyen en nombre (Mₙ) compris entre 6 000 et 50 000, et EP" est une seconde séquence hydrogénée de polyisoprène (I") possédant un poids moléculaire moyen en nombre (Mₙ) compris entre 2500 et 50 000 avant hydrogénation, le rapport des poids moléculaires de (Mₚ) I'/I" est d'au moins 1,4, X est un noyau d'un agent de couplage polyalcénylique et n est le nombre moyen de bras (EP'-S-EP") par molécule étoilée formée par la réaction de deux ou de plus de deux moles d'agent de couplage polyalcénylique par mole des bras.

2. Polymère étoilé suivant la revendication 1, caractérisé en ce que l'agent de couplage polyacénylique est le divinylbenzène.

3. Polymère étoilé suivant la revendication 1 ou 2, caractérisé en ce que le poids moléculaire moyen en nombre (Mₙ) de la première séquence de polyisoprène (I') varie de 20000 à 60000, le poids moléculaire moyen en nombre (Mₙ) de la seconde séquence de polyisoprène (I") varie de 5500 à 33000, et le rapport des poids moléculaires (Mₚ) de I'/I" fluctue de 1,8 à 10,9.

4. Polymère étoilé suivant l'une quelconque des revendications 1 à 3, caractérisé en ce que le poids moléculaire moyen en nombre (Mₙ) de la séquence de polystyrène varie de 10000 à 35000.

5. Polymère étoilé suivant l'une quelconque des revendications 1 à 4, caractérisé en ce que n est le nombre moyen de bras par molécule à l'état couplé à 3 moles de divinylbenzène par mole des bras.

6. Polymère étoilé suivant l'une quelconque des revendications 1 à 5, caractérisé en ce que la séquence de polyisoprène est hydrogénée à raison d'au moins 98%.

7. Polymère étoilé suivant l'une quelconque des revendications 1 à 6, caractérisé en ce que moins de 10% de l'instauration aromatique sont hydrogénés.

8. Procédé de préparation d'un polymère étoilé suivant l'une quelconque des revendications 1 à 7, caractérisé en ce que l'on polymérise anioniquement l'isoprène en présence de sec-butyllithium, on ajoute du styrène, et ensuite davantage d'isoprène aux molécules de polystyrène vivantes pour préparer les molécules de copolymères séquencés vivantes, on couple les molécules de copolymères séquencés vivantes à l'agent de couplage polyalcénylique pour former un polymère étoilé et on hydrogène sélectivement la séquence de polyisoprène.

9. Composition d'huile lubrifiante, comprenant une huile de base et une proportion d'amélioration de la viscosité d'un polymère étoilé suivant l'une quelconque des revendications 1 à 7.

10. Concentré d'huile lubrifiante comprenant de 10 à 80% en poids, sur base du concentré total, d'un polymère étoilé suivant l'une quelconque des revendications 1 à 7.
